# EUROPÄISCHE PATENTANMELDUNG

(11) **EP 4 790 393 A1**
(43) Veröffentlichungstag der Anmeldung: **12.08.2026**
(21) Anmeldenummer: 26151303.0
(22) Anmeldetag: 12.01.2026
(51) Int. Cl.: G01N 21/954, G01B 11/24, G02B 23/24

(54) **NUTENWANDUNGSINSPEKTIONSVORRICHTUNG**

(30) Priorität: 10.02.2025 DE 102025104849
(71) Anmelder: JENOPTIK Industrial Metrology Germany GmbH, 78052 Villingen-Schwenningen (DE)
(72) Erfinder: RUDOLF, Michael, 78467 Konstanz (DE); MÜLLER, Christoph, 78549 Spaichingen (DE)
(74) Vertreter: Hoefer & Partner Patentanwälte mbB

(57) **Zusammenfassung**

Eine Nutenwandungsinspektionsvorrichtung 2 zur Inspektion einer Nutenwandung 8 einer Nut an einer schwer zugänglichen Stelle eines Bauteils weist ein in einer Abtastrichtung relativ zu der Nutenwandung 8 bewegliches Endoskop 10 mit Seitenblick zum Abbilden der Nutenwandung 8 auf einen matrixförmigen digitalen Bildsensor 14 auf, der mit einer Bildverarbeitungseinrichtung 20 in Datenübertragungsverbindung steht. Der Bildsensor 14 ist derart ausgebildet bzw. programmiert, dass bei einer Relativbewegung des Endoskops 10 relativ zu der Nutenwandung 8 zeitlich aufeinanderfolgend Einzelbilder 32 der Nutenwandung 8 aufgenommen werden. Der Bildsensor 14 und die Bildverarbeitungseinrichtung 20 sind derart ausgebildet bzw. programmiert, dass aus jedem Einzelbild 32 in Abtastrichtung wenigstens ein Teilbild 34 extrahiert wird und aus einer Aneinanderreihung der Teilbilder 34 ein Gesamtbild der Nutenwandung 8 generiert wird.

## Beschreibung

Die Erfindung betrifft eine Nutenwandungsinspektionsvorrichtung zur Inspektion einer Nutenwandung einer Nut an einer schwer zugänglichen Stelle eines Bauteils.

Die Inspektion von technischen, insbesondere metallischen Oberflächen an Bauteilen dient im Rahmen der Fertigungsmesstechnik dazu, Oberflächenanomalien und insbesondere Oberflächendefekte zu erkennen, die zu einer späteren Fehlfunktion des Bauteils führen könnten. Hierzu wird bei einer optischen Inspektion beispielsweise eine Kamera verwendet, die ein Bild der Oberfläche aufnimmt, das in einer nachgeordneten Bildverarbeitungseinrichtung verarbeitet wird, um Oberflächenanomalien in dem Kamerabild zu identifizieren. Hierzu ist es erforderlich, an der Inspektionsstelle eine ausreichende Beleuchtung bereitzustellen. Dies ist insbesondere bei der Inspektion von Stellen an zerklüfteten Bauteilen oder von tiefliegenden Stellen in beispielsweise topfartigen Bauteilen mit großer axialer Tiefe schwierig.

Der Erfindung liegt die Aufgabe zugrunde, eine Vorrichtung anzugeben, die mit hoher Inspektionsgenauigkeit eine Inspektion einer Nutenwandung einer Nut an einer schwer zugänglichen Stelle eines Bauteils ermöglicht.

Diese Aufgabe wird durch die im Anspruch 1 angegebene Erfindung gelöst.

Die Erfindung stellt eine Nutenwandungsinspektionsvorrichtung bereit, die ein
in einer Abtastrichtung relativ zu der Nutenwandung bewegliches Endoskop mit Seitenblick zum Abbilden der Nutenwandung auf einen matrixförmigen digitalen Bildsensor aufweist, der mit einer Bildverarbeitungseinrichtung in Datenübertragungsverbindung steht. Der Bildsensor ist derart ausgebildet bzw. programmiert, dass bei einer Relativbewegung des Endoskops relativ zu der Nutenwandung zeitlich aufeinanderfolgend Einzelbilder der Nutenwandung aufgenommen werden, wobei der Bildsensor und die Bildverarbeitungseinrichtung derart ausgebildet bzw. programmiert sind, dass aus jedem Einzelbild in Abtastrichtung ein Teilbild extrahiert wird und aus einer Aneinanderreihung der Teilbilder ein Gesamtbild der Nutenwandung generiert wird.

Die Erfindung geht von der Erkenntnis aus, dass eine Lichtquelle zur Beleuchtung der Inspektionsstelle in Abtastrichtung bzw. in Umfangsrichtung beispielsweise einer umlaufenden Nut lediglich über einen gewissen Bereich eine Beleuchtung liefert, die in dem Sinne homogen ist, dass in Abtastrichtung auftretende Helligkeitsunterschiede in einem von einem digitalen Bildsensor aufgenommenen Bild die Auswertung des Bildes im Rahmen der gewünschten Inspektionsgenauigkeit nicht beeinträchtigen.

Hiervon ausgehend liegt der Erfindung der Gedanke zugrunde, für die Inspektion einer Nutenwandung ein Endoskop mit Seitenblick zu verwenden, bei dem die optische Achse durch einen Spiegel oder ein Prisma so umgelenkt wird, dass das Endoskop senkrecht oder annähernd senkrecht auf die zu inspizierende Nutenwandung blickt. Das Endoskop bildet die Nutenwandung auf einen matrixförmigen digitalen Bildsensor ab. Erfindungsgemäß werden bei einer Relativbewegung des Endoskops relativ zu der Nutenwandung zeitlich aufeinanderfolgend Einzelbilder der Nutenwandung aufgenommen. Dabei wird aus jedem Einzelbild in Abtastrichtung ein Teilbild extrahiert und in der Bildverarbeitungseinrichtung aus einer Aneinanderreihung der Teilbilder ein Gesamtbild der Nutenwandung generiert.

Beispielsweise und insbesondere kann die Ausdehnung des Teilbildes in Abtastrichtung so gewählt werden, dass das Teilbild einen homogen ausgeleuchteten Teil des Einzelbildes repräsentiert, sodass das Gesamtbild aus einer Aneinanderreihung von Teilbildern gleicher Helligkeit entsteht. Auf diese Weise sind Inspektionsungenauigkeiten vermieden, die bei der automatischen Bildverarbeitung durch Helligkeitsunterschiede in den Teilbildern entstehen könnten.

Auf diese Weise ermöglicht die erfindungsgemäße Nutenwandungsinspektionsvorrichtung, die nachfolgend auch kurz als Vorrichtung bezeichnet wird, eine hohe Inspektionsgenauigkeit.

Ein weiterer Vorteil der erfindungsgemäßen Vorrichtung besteht darin, dass sie eine Inspektion von Nutenwandungen mit hoher Geschwindigkeit ermöglicht.

Die Erfindung steht damit insgesamt eine Vorrichtung bereit, die im Rahmen der Fertigungsmesstechnik sowohl eine hohe Inspektionsgeschwindigkeit als auch eine hohe Inspektionsgenauigkeit ermöglicht.

Erfindungsgemäß wird unter einer Aneinanderreihung der Teilbilder zum Generieren eines Gesamtbildes der Nutenwandung einerseits verstanden, dass die Teilbilder unmittelbar aneinander angefügt werden. Unter einer Aneinanderreihung der Teilbilder wird erfindungsgemäß jedoch auch verstanden, dass in der Bildverarbeitungseinrichtung aus den Teilbildern Bilddaten errechnet werden, die dann aneinander angefügt werden. Beispielsweise kann aus jedem Teilbild eine Teillinie errechnet werden, wobei sich das Gesamtbild aus einer Aneinanderreihung der Teillinien ergibt, wie dies weiter unten näher erläutert wird.

Eine vorteilhafte Weiterbildung der Erfindung sieht eine Antriebseinrichtung zum Erzeugen einer Relativbewegung des Endoskops relativ zu der Nutenwandung vor, wobei der Bildsensor derart mit der Antriebseinrichtung synchronisiert ist, dass das zeitliche Intervall zwischen zwei Einzelbildern in Abhängigkeit von der Relativgeschwindigkeit des Endoskops zu der Nutenwandung gewählt ist oder wird. Eine Synchronisation der Antriebseinrichtung mit dem Bildsensor ermöglicht unterschiedliche Geschwindigkeiten der Relativbewegung des Endoskops zu der Nutenwandung, um die erfindungsgemäße Vorrichtung beispielsweise an unterschiedliche Bauteile anzupassen.

Die Ausdehnung (Breite) jedes Teilbildes in Abtastrichtung ist entsprechend den jeweiligen Anforderungen und Gegebenheiten innerhalb weiterer Grenzen wählbar. Dabei können der Bildsensor und die Bildverarbeitungseinrichtung so ausgebildet bzw. programmiert sein, dass die Ausdehnung jedes Teilbildes fest ist, der Betrieb der Nutenwandungsinspektionsvorrichtung also stets mit derselben Breite jedes Teilbild erfolgt. Die Ausdehnung jedes Teilbildes kann jedoch erfindungsgemäß durch entsprechende Ausbildung bzw. Programmierung des Bildsensors und der Bildverarbeitungseinrichtung auch veränderlich sein, beispielsweise derart, dass die Ausdehnung vor einem Inspektionsvorgang statisch festgelegt wird und während des Inspektionsvorganges konstant bleibt. Die Ausdehnung jedes Teilbildes kann jedoch auch dynamisch während des Inspektionsvorganges verändert werden, indem während des Inspektionsvorganges die Ausdehnung des Teilbildes angepasst wird, beispielsweise zur Anpassung an sich in Abtastrichtung verändernde Gegebenheiten der Oberfläche der Nutenwandung.

Eine andere vorteilhafte Weiterbildung der Erfindung sieht vor, dass der Bildsensor und die Bildverarbeitungseinrichtung derart programmiert sind, dass die Ausdehnung jedes Teilbildes in Abtastrichtung so gewählt ist oder wird, dass das Teilbild einen homogen ausgeleuchteten Teil des Einzelbildes repräsentiert. Dabei kann das Teilbild entsprechend den jeweiligen Anforderungen und Gegebenheiten einen in Hellfeldbeleuchtung beleuchteten Teil der Nutenwandung oder einen in Dunkelfeldbeleuchtung beleuchteten Teil der Nutenwandung repräsentieren. Es ist auch möglich, dass das Teilbild einen Teil der Nutenwandung repräsentiert, der sich in einem Übergangsbereich zwischen Hellfeldbeleuchtung und Dunkelfeldbeleuchtung befindet. Wesentlich ist im Sinne einer hohen Inspektionsgenauigkeit, dass den einzelnen Teilbildern die gleiche Beleuchtungssituation zugrunde liegt. Es ist erfindungsgemäß beispielsweise auch möglich, bei einer Relativbewegung des Endoskops zu der Nutenwandung mittels des digitalen Bildsensors sowohl Teilbilder in Hellfeldbeleuchtung als auch Teilbilder in Dunkelfeldbeleuchtung aufzunehmen und in der Bildverarbeitungseinrichtung sowohl ein Gesamtbild der Nutenwandung in Hellfeldbeleuchtung als auch ein Gesamtbild der Nutenwandung in Dunkelfeldbeleuchtung zu generieren, sodass die zu inspizierende Nutenwandung einerseits in Hellfeldbeleuchtung und andererseits in Dunkelfeldbeleuchtung inspiziert werden kann.

Grundsätzlich kann jeweils ein von dem digitalen Bildsensor aufgenommenes Einzelbild zu der Bildverarbeitungseinrichtung übertragen und das Teilbild in der Bildverarbeitungseinrichtung aus dem Einzelbild extrahiert werden. Im Sinne einer Erhöhung der Bildverarbeitungs- und damit der Inspektionsgeschwindigkeit sieht eine andere vorteilhafte Weiterbildung der Erfindung vor, dass der Bildsensor derart programmiert ist, dass ausschließlich das Teilbild jedes Einzelbildes ausgelesen und zu der Bildverarbeitungseinrichtung übertragen wird.

Grundsätzlich kann die Beleuchtung der Nutenwandung mittels einer von der Nutenwandungsinspektionsvorrichtung separaten Beleuchtungsanordnung bewirkt werden. Zweckmäßigerweise ist die Beleuchtungsanordnung jedoch Teil der Nutenwandungsinspektionsvorrichtung, die in diesem Sinne vorteilhafterweise eine Beleuchtungsanordnung mit wenigstens einer Lichtquelle zur Beleuchtung der Nutenwandung vorsieht.

Eine vorteilhafte Weiterbildung der vorgenannten Ausführungsform sieht vor, dass wenigstens eine Lichtquelle mit dem Endoskop verbunden ist, insbesondere mit dem distalseitigen Ende des Endoskops. Auf diese Weise bildet das Endoskop eine Baueinheit mit der Lichtquelle bzw. den Lichtquellen.

Im Sinne einer möglichst guten Ausleuchtung der Inspektionsstelle sieht eine andere vorteilhafte Weiterbildung der Erfindung vor, dass die Beleuchtungsanordnung wenigstens zwei Lichtquellen aufweist, von denen beiderseits einer Ausblicköffnung des Endoskops jeweils wenigstens eine Lichtquelle angeordnet ist.

Die Ausgestaltung der Lichtquelle bzw. der Lichtquellen ist entsprechend den jeweiligen Anforderungen und Gegebenheiten innerhalb weiter Grenzen wählbar. Im Sinne eines einfachen und kostengünstigen Aufbaus sieht eine andere Weiterbildung der Erfindung vor, dass wenigstens eine Lichtquelle eine LED-Lichtquelle ist. Entsprechende LED-Lichtquellen stehen als relativ einfache, kostengünstige und energieeffiziente Standardbauteile zur Verfügung.

Im Sinne einer weitestmöglichen Integration zwischen dem Endoskop und der Lichtquelle bzw. den Lichtquellen und eines möglichst kompakten Aufbaus sieht eine vorteilhafte Weiterbildung der Erfindung vor, dass mit dem distalseitigen Ende des Endoskops ein Trägerelement verbunden ist, das wenigstens eine Lichtquelle trägt.

Eine außerordentlich vorteilhafte Weiterbildung der vorgenannten Ausführungsform sieht vor, dass das Trägerelement als Kühlkörper für die Lichtquelle bzw. die Lichtquellen ausgebildet ist. Indem der Kühlkörper eine Doppelfunktion einerseits zur Kühlung und andererseits als Trägerelement für die Lichtquelle bzw. Lichtquellen ausführt, ergibt sich ein weiter vereinfachter Aufbau mit einer minimierten Anzahl von Bauteilen.

Eine andere vorteilhafte Weiterbildung der Erfindung sieht vor, dass das Endoskop einen Spiegel oder ein Prisma zur Umlenkung des Abbildungsstrahlenganges bzw. der optischen Achse um vorzugsweise 90° aufweist.

Eine andere vorteilhafte Weiterbildung der Erfindung sieht vor, dass zur Inspektion einer zylindrischen Nutenwandung die Antriebseinrichtung für eine Orbitaldrehung des Endoskops um eine bezogen auf die Umfangsrichtung der Nut zentrische Drehachse ausgebildet und eingerichtet ist.

Eine andere vorteilhafte Weiterbildung der Erfindung sieht vor, dass die Beleuchtungsanordnung eine Linienlichtquelle zur Projektion einer Lichtlinie auf die Nutenwandung aufweist, wobei die Linienlichtquelle relativ zu dem Endoskop derart angeordnet ist, dass die Lichtlinie bezogen auf die Blickrichtung des Endoskops unter einem Winkel α auf die Nutenwandung projizierbar ist oder projiziert wird, wobei der Bildsensor derart ausgebildet bzw. programmiert ist, dass das Teilbild den Verlauf der projizierten Lichtlinie erfasst und wobei die Bildverarbeitungseinrichtung derart ausgebildet und programmiert ist, dass aus dem in dem Teilbild erfassten Verlauf der Projektion der Lichtlinie mittels eines 3D-Rekonstruktionsverfahrens eine die Topographie der Oberfläche der Nutenwandung repräsentierende Teillinie ermittelt wird und ein topographisches Gesamtbild der Nutenwandung durch Aneinanderreihung von Teillinien generiert wird, die aus in Abtastrichtung aufeinanderfolgenden Einzelbildern und daraus extrahierten Teilbildern ermittelt wurden. Diese Ausführungsform behält das erfindungsgemäße Grundprinzip der Extraktion von Teilbildern aus Einzelbildern bei, errechnet jedoch aus jedem Teilbild eine die Topographie der Oberfläche der Nutenwandung an der Inspektionsstelle repräsentierende Teillinie. Die so errechneten Teillinien werden dann in Umfangsrichtung aufeinanderfolgend entsprechend der Abfolge in Umfangsrichtung der zugrunde liegenden Einzelbilder und daraus extrahierten Teilbilder aneinandergereiht und ergeben so ein Gesamtbild der Topographie der Oberfläche der Nutenwandung. Auch bei dieser Ausführungsform kann die Ausdehnung (Breite) jedes Teilbildes fest sein oder statisch, also vor einem Inspektionsvorgang, oder dynamisch, also während eines Inspektionsvorganges, verändert werden bis hin zu einer Konstellation, in der die Ausdehnung des Teilbildes der Ausdehnung des Einzelbildes entspricht.

In Bezug auf die vorhergehende Ausführungsform sind entsprechende 3D-Rekonstruktionsverfahren dem Fachmann allgemein bekannt und werden daher hier nicht näher erläutert. Eine Weiterbildung der vorgenannten Ausführungsform sieht vor, dass das 3D-Rekonstruktionsverfahren ein Triangulationsverfahren ist.

Eine andere Weiterbildung sieht vor, dass die Lichtlinienquelle einen Laser aufweist, derart, dass die Lichtlinie eine Laserlinie ist.

Ein erfindungsgemäßes Verfahren zur Inspektion einer Nutenwandung einer Nut an einer schwer zugänglichen Stelle eines Bauteils ist im Anspruch 16 angegeben und dadurch gekennzeichnet, dass eine erfindungsgemäße Nutenwandungsinspektionsvorrichtung verwendet wird.

Die Erfindung ist insbesondere für die Inspektion von Nutenwandungen, beispielsweise von umlaufenden Nuten geeignet in insbesondere zylindrischen Bauteilen, kann jedoch auch zur Inspektion anderer Inspektionsstellen verwendet werden.

Unter einer homogenen Beleuchtung wird im Sinne der Erfindung verstanden, dass Beleuchtungsunterschiede, beispielsweise in einem Teilbild, so gering sind, dass sie die erforderliche bzw. vorgegebene Inspektionsgenauigkeit bei der Untersuchung auf Oberflächendefekte nicht beeinträchtigen.

Die Erfindung wird nachfolgend unter Bezugnahme auf die beigefügte stark schematisierte Zeichnung anhand von Ausführungsbeispielen näher erläutert. Es ist für den Fachmann ersichtlich, dass die einzelnen Merkmale jedes Ausführungsbeispiels das Ausführungsbeispiel jeweils für sich genommen, also unabhängig von den weiteren Merkmalen, weiterbilden. Damit ist für den Fachmann auch ersichtlich, dass alle beschriebenen, in der Zeichnung dargestellten und in den Patentansprüchen beanspruchten Merkmale für sich genommen sowie in beliebiger technisch sinnvoller Kombination miteinander den Gegenstand der Erfindung bilden, unabhängig von ihrer Zusammenfassung in den Patentansprüchen und deren Rückbezügen sowie unabhängig von ihrer konkreten Beschreibung bzw. Darstellung in der Zeichnung. Zum Gegenstand und Offenbarungsgehalt der vorliegenden Anmeldung gehören Unterkombinationen der Patentansprüche, bei denen wenigstens ein Merkmal eines Patentanspruchs weggelassen oder durch ein anderes Merkmal ersetzt ist.

Es zeigt:
- Fig. 1: in einer schematischen Prinzipskizze ein erstes Ausführungsbeispiel einer erfindungsgemäßen Nutenwandungsinspektionsvorrichtung,
- Fig. 2: eine Schemaskizze zur Verdeutlichung der Funktionsweise der Vorrichtung gemäß Fig. 1,
- Fig. 3: ein Endoskop der Vorrichtung gemäß Fig. 1,
- Fig. 4: in gegenüber Fig. 4 vergrößerten Maßstab eine Einzelheit des Endoskops gemäß Fig. 4 an seinem distalseitigen Ende,
- Fig. 5: in gleicher Darstellung wie Fig. 1 ein zweites Ausführungsbeispiel einer erfindungsgemäßen Vorrichtung,
- Fig. 6: eine Schemaskizze zur Verdeutlichung der Funktionsweise der Vorrichtung gemäß Fig. 5 und
- Fig. 7: eine Schemaskizze zur Verdeutlichung der Funktionsweise der Vorrichtung gemäß Fig. 5.

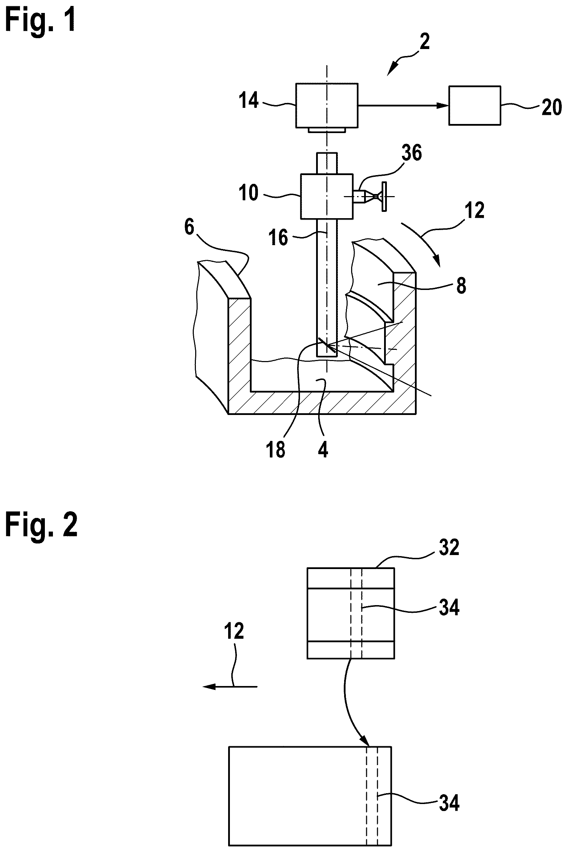

Nachfolgend werden unter Bezugnahme auf Fig. 1 bis Fig. 7 Ausführungsbeispiele einer erfindungsgemäßen Nutenwandungsinspektionsvorrichtung, die nachfolgend auch kurz als Vorrichtung bezeichnet wird, näher erläutert.

Fig. 1 zeigt in einer schematischen Prinzipskizze ein erstes Ausführungsbeispiel einer erfindungsgemäßen Nutenwandungsinspektionsvorrichtung 2. Die Vorrichtung 2 dient zur Inspektion einer Nutenwandung einer Nut an einer schwer zugänglichen Stelle eines Bauteils. Rein schematisch ist in Fig. 1 ein Ausschnitt aus einer Nut 4 dargestellt, die als in Umfangsrichtung eines zylindrischen Bauteiles aus Metall umlaufende Nut ausgebildet ist und zylindrisch begrenzte Nutenwandungen 6, 8 aufweist.

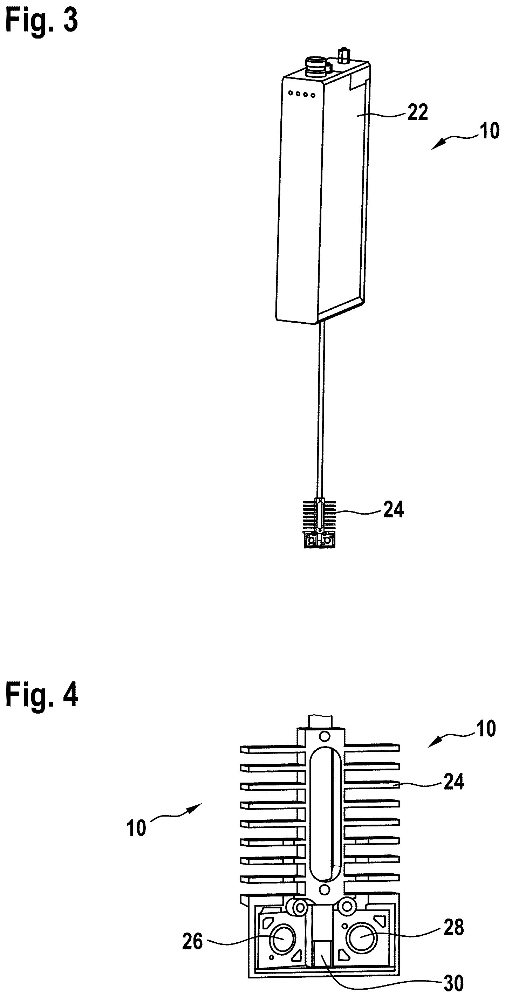

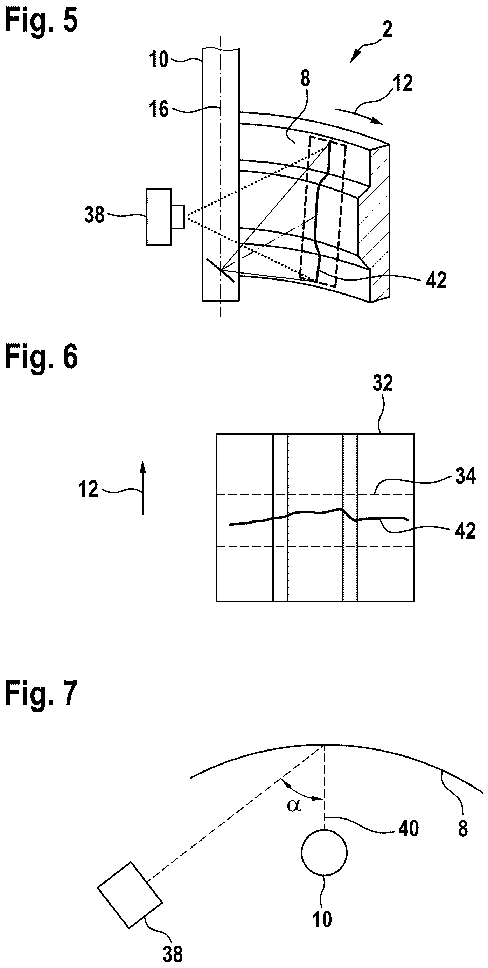

Die Vorrichtung 2 weist ein in Fig. 1 schematisiert und in Fig. 4 und Fig. 5 näher dargestelltes Endoskop 10 mit Seitenblick auf, das mittels einer Antriebseinrichtung relativ zu den Nutenwandung 8 bewegbar ist. Bei dem dargestellten Ausführungsbeispiel ist die Antriebseinrichtung für eine Orbitaldrehung des Endoskops 10 um eine bezogen auf die Umfangsrichtung der Nut zentrische Drehachse ausgebildet und eingerichtet. Die Antriebseinrichtung ist in der Zeichnung nicht näher dargestellt. Aufbau und Funktionsweise einer entsprechenden Antriebseinrichtung sind dem Fachmann jedoch allgemein bekannt und werden daher hier nicht näher erläutert. In Fig. 1 ist die mittels der Antriebseinrichtung erzeugte Relativbewegung zwischen dem Endoskop 10 und der Nutenwandung 8 durch einen Pfeil 12 angedeutet.

Das Endoskop 10 dient zum Abbilden der Nutenwandung 8 auf einen matrixförmige digitalen Bildsensor 14, der bei dem dargestellten Ausführungsbeispiel Teil einer Matrixkamera ist.

Das Endoskop 10 ist als Endoskop mit Seitenblick ausgebildet, indem seine optische Achse 16 und damit der Abbildungsstrahlenganges durch einen Spiegel 18 (oder ein Prisma) um 90° umgelenkt ist, sodass die Blickrichtung des Endoskops 10 zu den Nutenwandung 8 senkrecht verläuft.

Der Bildsensor 14 ist derart ausgebildet bzw. programmiert, dass bei einer Relativbewegung des Endoskops 10 relativ zu den Nutenwandung 8 zeitlich aufeinanderfolgend Einzelbilder der Nutenwandung 10 aufgenommen werden.

Der Bildsensor 14 steht mit einer nachgeordneten Bildverarbeitungseinrichtung 20 in Datenübertragungsverbindung.

Fig. 3 zeigt in einer Gesamtansicht das Endoskop 10, das an seinem proximalseitigen Ende einen gehäuseartigen Grundkörper 22 aufweist, in dem die Matrixkamera mit dem Bildsensor 4 aufgenommen ist. Zum distalseitigen Ende hin ist das Endoskop 10 als dünner Stab ausgebildet, an dessen distalseitigem Ende ein Trägerelement 24 angeordnet ist.

Fig. 4 zeigt in gegenüber Fig. 3 vergrößertem Maßstab das distalseitige Ende des Endoskops 10 mit dem Trägerelement 24, das zwei als LED-Lichtquellen 26, 28 ausgebildete Lichtquellen einer Beleuchtungsanordnung zur Beleuchtung der Nutenwandung 8 aufweist. Die Lichtquellen 26,28 sind beiderseits einer Ausblicköffnung 30 des Endoskops 10 angeordnet. Bei dem dargestellten Ausführungsbeispiel ist das Trägerelement 24 als Kühlkörper für die LED-Lichtquellen 26, 28 ausgebildet und hat damit eine Doppelfunktion, indem es die LED-Lichtquellen 26, 28 einerseits trägt und andererseits für deren Kühlung sorgt.

Das Endoskop 10 ist starr ausgebildet in Abgrenzung zu beispielsweise medizinischen Endoskopen, die zwischen der Ausblicköffnung und einem nachgeordneten Bildsensor Lichtwellenleiter aufweisen und dadurch biegsam ausgebildet sind.

Der Bildsensor 14 ist derart ausgebildet bzw. programmiert, dass bei einer Relativbewegung des Endoskops 10 relativ zu den Nutenwandung 8 zeitlich aufeinanderfolgend Einzelbilder der Nutenwandung 8 aufgenommen werden.

Erfindungsgemäß sind der Bildsensor 14 und die Bildverarbeitungseinrichtung 20 derart ausgebildet bzw. programmiert, dass aus jedem Einzelbild in Abtastrichtung ein Teilbild extrahiert wird und aus Aneinanderreihung der Teilbilder ein Gesamtbild der Nutenwandung 8 generiert wird.

Dieses Grundprinzip ist in Fig. 2 oben dargestellt. Ein Quadrat 32 symbolisiert ein Einzelbild, das der gesamten Fläche des matrixförmigen Bildsensors 14 entspricht. Erfindungsgemäß wird aus dem Einzelbild 32 ein Teilbild 34 extrahiert, das in Abtastrichtung einem Teil des Einzelbildes 32 entspricht. Das Teilbild 34 kann beispielsweise dadurch aus dem Einzelbild 32 extrahiert werden, dass ausschließlich die dem Teilbild 34 entsprechenden Spalten der Matrix des Bildsensors 14 ausgelesen und zu der Bildverarbeitungseinrichtung 20 übertragen werden. Alternativ hierzu kann jedes Teilbild zu der Bildverarbeitungseinrichtung 20 übertragen und in dieser das Teilbild 34 aus dem Einzelbild 32 extrahiert werden.

Bei der Relativbewegung des Endoskops 10 relativ zu der Nutenwandung 8 werden in einem definierten zeitlichen Abstand zueinander Einzelbilder 32 aufgenommen, aus den Einzelbildern 32 Teilbilder 34 extrahiert und die Teilbilder 34 in der Bildverarbeitungseinrichtung 20 zu einem Gesamtbild der Nutenwandung 8 zusammengesetzt. Das Gesamtbild der Nutenwandung kann dann in der Bildverarbeitungseinrichtung daraufhin untersucht werden, ob in der Nutenwandung 8 Oberflächenanomalien, insbesondere Oberflächendefekte, vorhanden sind. Entsprechende Verfahren der Bildverarbeitung und Mustererkennung sind dem Fachmann allgemein bekannt und werden daher hier nicht näher erläutert.

Der Bildsensor 14 ist derart mit der Antriebseinrichtung synchronisiert, dass das zeitliche Intervall zwischen 2 Einzelbildern in Abhängigkeit von der Relativgeschwindigkeit des Endoskops 10 zu der Nutenwandung 8 bei dem dargestellten Ausführungsbeispiel so gewählt ist, dass eine Aneinanderreihung der Teilbilder 34 ein lückenloses Gesamtbild der Nutenwandung 8 in Abtastrichtung ergibt.

Bei dem dargestellten Ausführungsbeispiel sind der Bildsensor und die Bildverarbeitungseinrichtung derart programmiert, dass die Ausdehnung jedes Teilbildes in Abtastrichtung so gewählt ist, dass das Teilbild 34 einen homogen ausgeleuchteten Teil des Einzelbildes 32 repräsentiert. Dementsprechend sind Teilbilder 34, die aus aufeinanderfolgenden Einzelbildern 32 extrahiert werden, unter den gleichen Beleuchtungsverhältnissen aufgenommen. Mit anderen Worten werden aus jedem aufgenommenen Einzelbild 32 diejenigen Bildbereiche ausgeblendet, in denen an den Rändern des ausgeleuchteten Bereiches der Nutenwandung 8 die Helligkeit abfällt und zunehmend inhomogener wird.

In Fig. 2 unten ist symbolisiert, wie ein Gesamtbild der Nutenwandung 8 aufeinanderfolgend aus extrahierten Teilbildern 34 zusammengesetzt wird

Auf diese Weise ergibt sich in einem aus den Teilbildern 34 zusammengesetzten Gesamtbild eine gleichmäßige Helligkeit, sodass sich bei der Auswertung des Gesamtbildes auf Oberflächenanomalien eine hohe Genauigkeit ergibt.

Durch eine hohe Relativgeschwindigkeit zwischen dem Endoskop 10 und der Nutenwandung 8 und entsprechend schnelles Auslesen des Bildsensors 14 ermöglicht die erfindungsgemäßen Vorrichtung 2 eine hohe Geschwindigkeit bei der Inspektion von Nutenwandungen.

Bei dem dargestellten Ausführungsbeispiel ist zusätzlich zu den LED-Lichtquellen 26, 28 eine weitere Lichtquelle 36 vorgesehen, die entfernt zu dem distalseitigen Ende des Endoskops 10 mit demselben verbunden ist.

In Fig. 5 ist ein zweites Ausführungsbeispiel einer erfindungsgemäßen Vorrichtung dargestellt, das sich von dem Ausführungsbeispiel gemäß Fig. 1 dadurch unterscheidet, dass anstelle einer flächigen Beleuchtung eine linienförmige Beleuchtung verwendet wird. Hierzu weist die Beleuchtungsanordnung eine Linienlichtquelle in Form einer Laser-Lichtquelle 38 zur Projektion einer Laserlinie auf die Nutenwandung 8 auf, wobei die Laser-Lichtquelle relativ zu dem Endoskop 10 derart angeordnet ist, dass die Laserlinie bezogen auf die Blickrichtung des Endoskops unter einem Winkel α auf die Nutenwandung projiziert wird. Dies ist in Fig. 7 dargestellt, in der die Blickrichtung (Abbildungsrichtung) des Endoskops 10 mit dem Bezugszeichen 40 bezeichnet ist.

Bei dem dargestellten Ausführungsbeispiel ist der Bildsensor 14 derart ausgebildet bzw. programmiert, dass das Teilbild 34 den Verlauf der projizierten Laserlinie erfasst, wie in Fig. 6 dargestellt. In Fig. 6 bezeichnet das Bezugszeichen 42 einen schematisch und überhöht dargestellten Verlauf der projizierten Laserlinie. Entsprechend der Topographie der Oberfläche der Nutenwandung 8 an der Stelle, auf die die Laserlinie projiziert wird, wird der Laserstrahl seitlich ausgelenkt, sodass sich entsprechend der Topographie ein mehr oder weniger gekrümmter Verlauf der Projektion ergibt, wie in Fig. 6 angedeutet.

Der Verlauf 42 der Laserlinie wird in dem Teilbild 34 erfasst, dessen Breite in Abtastrichtung (entsprechend den Spalten der Matrix des matrixförmige Bildsensors 14) so gewählt ist, dass der Verlauf 42 in Abtastrichtung vollständig erfasst ist. Falls entsprechend den Anforderungen und topographischen Gegebenheiten der Oberfläche der Nutenwandung 8 erforderlich oder wünschenswert, kann die Breite des Teilbildes 34 während des Inspektionsvorganges dynamisch verändert werden.

Das Teilbild 34 wird zu der Bildverarbeitungseinrichtung 20 übertragen, in der aus dem in dem Teilbild 34 erfassten Verlauf der Projektion der Laserlinie mittels eines 3D-Rekonstruktionsverfahrens, insbesondere eines Triangulationsverfahrens, eine die Topographie der Oberfläche der Nutenwandung 8 repräsentierende Teillinie (Topographielinie) ermittelt wird. Ein topographisches Gesamtbild der Nutenwandung 8 ergibt sich durch Aneinanderreihung der Teillinien (Topographielinien), die aus Teilbildern ermittelt werden, die aus aufeinanderfolgend aufgenommenen Einzelbildern extrahiert werden. Im Ergebnis wird dadurch die dreidimensionale Topographie der Oberfläche der Nutenwandung 8 rekonstruiert. Anhand der Topographie kann nicht nur festgestellt werden, ob Oberflächenanomalien der Nutenwandung 8 vorliegen, sondern es kann auch festgestellt werden, welche Ausdehnung senkrecht zur Nutenwandung 8 eine Oberflächenanomalie hat. Dementsprechend kann auch unterschieden werden, ob es sich bei einer festgestellten Oberflächenanomalie um eine Vertiefung und damit um einen Oberflächendefekt oder um eine Erhebung handelt, die beispielsweise durch eine Verschmutzung verursacht ist. Auf diese Weise ist die Inspektion der Oberfläche der Nutenwandung weiter verbessert.

### Bezugszeichenliste

- 2: Vorrichtung
- 4: Nut
- 6: Nutenwandung
- 8: Nutenwandung
- 10: Endoskop
- 12: Pfeil
- 14: Bildsensor
- 16: optische Achse
- 18: Spiegel
- 20: Bildverarbeitungseinrichtung
- 22: Grundkörper
- 24: Trägerelement
- 26: Lichtquelle
- 28: Lichtquelle
- 30: Ausblicköffnung
- 32: Einzelbild
- 34: Teilbild
- 36: weitere Lichtquelle
- 38: Laser-Lichtquelle
- 40: Blickrichtung von 10
- 42: Verlauf

## Patentansprüche

1. Nutenwandungsinspektionsvorrichtung (2) zur Inspektion einer Nutenwandung (8) einer Nut an einer schwer zugänglichen Stelle eines Bauteils,
mit einem in einer Abtastrichtung (12) relativ zu der Nutenwandung (8) beweglichen Endoskop (10) mit Seitenblick zum Abbilden der Nutenwandung (8) auf einen matrixförmigen digitalen Bildsensor (14), der mit einer Bildverarbeitungseinrichtung (20) in Datenübertragungsverbindung steht
wobei der Bildsensor (14) derart ausgebildet bzw. programmiert ist, dass bei einer Relativbewegung des Endoskops (10) relativ zu der Nutenwandung (8) zeitlich aufeinanderfolgend Einzelbilder (32) der Nutenwandung (8) aufgenommen werden und
wobei der Bildsensor (14) und die Bildverarbeitungseinrichtung (20) derart ausgebildet bzw. programmiert sind, dass aus jedem Einzelbild (32) in Abtastrichtung (12) wenigstens ein Teilbild (34) extrahiert wird und aus einer Aneinanderreihung der Teilbilder (34) ein Gesamtbild der Nutenwandung (8) generiert wird.

2. Nutenwandungsinspektionsvorrichtung nach Anspruch 1, mit einer Antriebseinrichtung zum Erzeugen einer Relativbewegung des Endoskops (10) relativ zu der Nutenwandung (8), wobei der Bildsensor (14) derart mit der Antriebseinrichtung synchronisiert ist, dass das zeitliche Intervall zwischen zwei Einzelbildern (32) in Abhängigkeit von der Relativgeschwindigkeit des Endoskops (10) zu der Nutenwandung (8) gewählt ist oder wird.

3. Nutenwandungsinspektionsvorrichtung nach Anspruch 1 oder 2, dass der Bildsensor (14) und die Bildverarbeitungseinrichtung (20) derart programmiert sind, dass die Ausdehnung jedes Teilbildes (34) in Abtastrichtung (12) so gewählt ist oder wird, dass das Teilbild (34) einen homogen ausgeleuchteten Teil des Einzelbildes (32) repräsentiert.

4. Nutenwandungsinspektionsvorrichtung nach einem der vorhergehenden Ansprüche, wobei der Bildsensor (14) derart ausgebildet bzw. programmiert ist, dass ausschließlich das Teilbild (34) jedes Einzelbildes (32) ausgelesen und zu der Bildverarbeitungseinrichtung (20) übertragen wird.

5. Nutenwandungsinspektionsvorrichtung nach einem der vorhergehenden Ansprüche, mit einer Beleuchtungsanordnung mit wenigstens einer Lichtquelle (26, 28; 36) zur Beleuchtung der Nutenwandung (8).

6. Nutenwandungsinspektionsvorrichtung nach Anspruch 5, wobei wenigstens eine Lichtquelle (26, 28; 36) mit dem Endoskop (10) verbunden ist, insbesondere mit dem distalseitigen Ende des Endoskops (10).

7. Nutenwandungsinspektionsvorrichtung nach Anspruch 5 oder 6, wobei die Beleuchtungsanordnung wenigstens zwei Lichtquellen (26, 28) aufweist, von denen beiderseits einer Ausblicköffnung (30) des Endoskops (10) jeweils wenigstens eine Lichtquelle (26; 28) angeordnet ist.

8. Nutenwandungsinspektionsvorrichtung nach Anspruch 7, wobei wenigstens eine Lichtquelle (26, 28) eine LED-Lichtquelle ist.

9. Nutenwandungsinspektionsvorrichtung nach Anspruch 7 oder 8, wobei mit dem distalseitigen Ende des Endoskops (10) ein Trägerelement (24) verbunden ist, das wenigstens eine Lichtquelle (26, 28) trägt.

10. Nutenwandungsinspektionsvorrichtung nach Anspruch 9, wobei das Trägerelement (24) als Kühlkörper für die Lichtquelle bzw. Lichtquellen (26, 28) ausgebildet ist.

11. Nutenwandungsinspektionsvorrichtung nach einem der vorhergehenden Ansprüche, wobei das Endoskop (10) einen Spiegel (18) oder ein Prisma zur Umlenkung der optischen Achse um vorzugsweise 90° aufweist.

12. Nutenwandungsinspektionsvorrichtung nach einem der Ansprüche 2 bis 11, wobei zur Inspektion einer zylindrischen Nutenwandung die Antriebseinrichtung für eine Orbitaldrehung des Endoskops (10) um eine bezogen auf die Umfangsrichtung der Nut (4) zentrische Drehachse ausgebildet und eingerichtet ist.

13. Nutenwandungsinspektionsvorrichtung nach einem der Ansprüche 5 bis 12, wobei die Beleuchtungsanordnung eine Linienlichtquelle zur Projektion einer Lichtlinie auf die Nutenwandung aufweist, wobei die Linienlichtquelle relativ zu dem Endoskop (10) derart angeordnet ist, dass die Lichtlinie bezogen auf die Blickrichtung des Endoskops (10) unter einem Winkel a auf die Nutenwandung projizierbar ist oder projiziert wird, wobei der Bildsensor (14) derart ausgebildet bzw. programmiert ist, dass das Teilbild (34) den Verlauf (42) der projizierten Lichtlinie erfasst und wobei die Bildverarbeitungseinrichtung (20) derart ausgebildet und programmiert ist, dass aus dem in dem Teilbild (34) erfassten Verlauf der Projektion der Lichtlinie mittels eines 3D-Rekonstruktionsverfahrens eine die Topographie der Oberfläche der Nutenwandung (8) repräsentierende Teillinie (Topographielinie) ermittelt wird und ein topographisches Gesamtbild der Nutenwandung (8) durch Aneinanderreihung von Teillinien generiert wird, die aus aufeinanderfolgenden Einzelbildern (32) und daraus extrahierten Teilbildern (34) ermittelt wurden.

14. Nutenwandungsinspektionsvorrichtung nach Anspruch 13, wobei das 3D-Rekonstruktionsverfahren ein Triangulationsverfahren ist.

15. Nutenwandungsinspektionsvorrichtung nach Anspruch 13 oder 14, wobei die Lichtlinienquelle einen Laser (38) aufweist, derart, dass die Lichtlinie eine Laserlinie ist.

16. Verfahren zur Inspektion einer Nutenwandung einer Nut an einer schwer zugänglichen Stelle eines Bauteils, wobei eine Nutenwandungsinspektionsvorrichtung nach einem der vorhergehenden Ansprüche verwendet wird.
